# EUROPEAN PATENT APPLICATION

(11) **EP 4 518 239 A1**
(43) Date of publication of application: **05.03.2025**
(21) Application number: 23194530.4
(22) Date of filing: 31.08.2023
(51) Int. Cl.: H04L 9/00

(54) **METHOD AND DEVICE FOR EXCHANGING DECENTRALIZED DIGITAL IDENTIFIERS**

(71) Applicant: Siemens Aktiengesellschaft, 80333 München (DE)
(72) Inventor: Aghaie, Anita, 81379 Munich (DE); Aschauer, Hans, 81829 München (DE); Maftun, Aliza, 81247 München (DE); Papagudi Subrahmanyam, Niranjana, 85540 Haar (DE); Passarelli, Anne, 80809 München (DE); Safieh, Malek, 81539 München (DE)
(74) Representative: Siemens Patent Attorneys

(57) **Abstract**

The method for exchanging decentralized digital identifiers with a responder (S) within a Hyperledger Indy network comprises the steps of
- providing a public requester KEM-key (pkR),
- receiving a public responder KEM-key (pkS),
- agreeing on an first (K1) and a second session key (K1') based on the public responder KEM-key (pkS),
- generating a first peer KEM-key pair with a first public peer KEM-key (pkPR) and a first public decentralized digital peer identifier (PeerDIDR) and sending the first public peer KEM-key (pkPR) and the first public decentralized digital peer identifier (PeerDIDR) after encryption with the first session key (K1) to the responder (R),
- agreeing on a third (K2) and a fourth session key (K2') based on the first public peer KEM-key (pkPR) and the public requester KEM-key (pkR),
- receiving a second public peer key (pkPS) and a second public decentralized digital peer identifier (PeerDIDS) from the responder (S) which are encrypted with the third session key (K2),
- agreeing on a fifth (K3) and sixth (K3') and seventh (K3'') and eigth (K3‴) session key based on the public responder KEM-key (pkS) and the public requester key (pkR) and the first public peer KEM-key (pkPR) and the second public peer key (pkPS),
- sending a receiving key conformation (RKC) after encryption with the fifth session key (K3),
- receiving a sending key confirmation (SKC) which is encrypted with the sixth session key (K3'), and
- preferably exchanging data (D1, D2) with the seventh (K3'') and eigth session key (K3‴).

## Description

This invention is related to a method for exchanging decentralized digital identifiers with a responder within a Hyperledger Indy network and to a method for exchanging decentralized digital identifiers with a requester within a Hyperledger Indy network. This invention is further related to a device that is able to exchange decentralized digital identifiers within a Hyperledger Indy network.

Hyperledger Indy provides tools, libraries, and components to support digital identities rooted on blockchains or some distributed ledgers, such that they are interoperable across administrative domains and applications. Indy is interoperable with other blockchains or can be used standalone to enable decentralized identifiers, commonly abbreviated as DID, along with a decentralized key management system, commonly abbreviated as DKMS, which together may replace a public key infrastructure, often briefly noted as PKI.

Entities in Hyperledger Indy require a protocol to establish relationships with each other for the exchange of secure information, while preserving privacy. In order to guarantee privacy, in addition to the available public DID that resolves to keys and endpoints on the Hyperledger Indy blockchain, Peer DIDs are used. Throughout this application, the terms "Peer DID", "PeerDID" and "peer DID" are used synonymously, whereas PeerDID with a subscript typically represent reference numerals in the drawings labelling particular peer DIDs unless otherwise noted. For any private relationship between two entities belonging to a Hyperledger Indy based network, each of these entities must generate a new PeerDID and store it in its wallet. The newly generated PeerDID is then exchanged with the other entity in an authenticated and secure way. The used protocol to exchange PeerDIDs is standardized in Aries RFC 0023 as the DID Exchange Protocol which is part of a larger suite of protocols called DIDComm messaging protocol
(https://github.com/decentralized-identity/didcomm-messaging). This protocol establishes an authenticated channel between two entities in Hyperledger Indy based on digital signatures.

However, currently there are no protocols to exchange PeerDIDs, which are suitable for post-quantum applications.

Thus, it is the problem of the invention, to provide an improved method for exchanging decentralized digital identifiers with a responder within a Hyperledger Indy network and to a method for exchanging decentralized digital identifiers with a requester within a Hyperledger Indy network. Likewise, it is the problem of the invention to provide a device that is able to exchange decentralized digital identifiers within a Hyperledger Indy network. In particular, the method and the device should be particulary suitable for post-quantum applications.

This problem of the invention is solved with a method as claims in claim 1 or 2 and with a device as claimed in claim 9 or 10. Preferred aspects and embodiments of the invention are contained in the dependent claims, the following description and in the drawing.

The method according to the invention is a method for exchanging decentralized digital identifiers with a responder within a Hyperledger Indy network. The method according to the invention involves the steps of
- providing a public requester KEM-key,
- receiving a public responder KEM-key,
- agreeing on an first and a second session key based on the public responder KEM-key,
- generating a first peer KEM-key pair with a first public peer KEM-key and a first public decentralized digital peer identifier and sending the first public peer KEM-key and the first public decentralized digital peer identifier after encryption with the first session key to the responding entity,
- agreeing on a third and a fourth session key based on the first public peer KEM-key and the public requester KEM-key,
- receiving a second public peer key and a second public decentralized digital peer identifier from the responder which are encrypted with the third session key,
- agreeing on a fifth and sixth and seventh and eigth session key based on the public responder KEM-key and the public requester key and the first public peer KEM-key and the second public peer key,
- sending a receiving key conformation after encryption with the fifth session key,
- receiving a sending key confirmation which is encrypted with the sixth session key, and
- preferably exchanging data with the seventh and eigth session key.

Alternatively, the method according to the invention may be expressed as a method for exchanging decentralized digital identifiers with a requester within a Hyperledger Indy network, wherein the method involves the steps of
- receiving a public requester KEM-key,
- providing a public responder KEM-key,
- agreeing on an first and a second session key based on the public responder KEM-key,
- receiving a first peer KEM-key pair with a first public peer KEM-key and a first public decentralized digital peer identifier that is encrypted with the first session key from the requester,
- agreeing on a third and a fourth session key based on the first public peer KEM-key and the public requester KEM-key,
- generating a second peer KEM-key pair with a second public peer KEM-key and a second public decentralized digital peer identifier and sending the second public peer KEM-key and the second public decentralized digital peer identifier after encryption with the third session key to the requester,
- agreeing on a fifth and sixth and seventh and eigth session key based on the public responder KEM-key and the public requester key and the first public peer KEM-key and the second public peer key,
- receiving a receiving key conformation which is encrypted with the fifth session key,
- sending a sending key confirmation after encryption with the sixth session key, and
- preferably exchanging data with the seventh and eigth session key.

The two previous formulations of the invention are described as being viewed either from the perspective of the requester or the perspective of the responder. Thus, the method either involves steps performed by the requester or by the responder. It is understood, however, that also a common unit may instruct both a receiver or a responder to perform the aforementioned steps. Thus, in this particular case, both of the previous formulations may also be combined with each other in order to describe this facultative aspect of the invention.

It is undderstood that the terminology used in the previous formulations include the wording requester and responder, which are commonly used in the Aries RFC 0023 protocol. Since the present invention deviates from the Aries RFC 0023 protocol in that it makes use of KEM key pairs instead, the wording sender may be used instead of responder and receiver may be used instead of requester.

Advantageously, the method according to the invention does not require digital signatures, but uses KEM operations instead. Since KEM algorithms are known to perform better for post-quantum applications, the method according to the invention is to be considered more perfomant than known methods and protocols, particularly for post-quantum applications. The method according to the invention is suitable for pre- and post-quantum applications and provides high efficiency for post-quantum secure communication domains. This is due to the fact that no digital signatures are required, which are typically much more expensive, i. e. resource intensive, than KEM operations in the post-quantum domain.

In a preferred aspect of the method according to the invention, wherein agreeing on session keys based on KEM-keys involves agreeing on a shared secret. It is generally known in the state of the art to agree on a shared secret. As generally known in the art, agreeing on a shared secret may be achieved by encapsulating a public KEM key, resulting in a shared secret and a variable for reconstructing the shared secret, so that reconstructing the shared secret with the variable requires using a private KEM key, that corresponds to the public KEM key.

In a preferred aspect of the method according to the invention, agreeing on session keys based on KEM-Keys involves applying a key derivation function on the shared secret. Such procedures are generally known in prior art.

Preferably, in the method according to the invention, a shared secret based on the first public peer key and/or a shared secret based on the public requester key is/are received which is encrypted with the second session key.

Preferably, in the method according to the invention, a shared secret based on the second public peer key is sent after encryption with the fourth session key.

In an advantageous aspect of the method according to the invention, a shared secret based on the first public peer key and/or a shared secret based on the public requester key is/are sent after encryption with the second session key.

In a preferred aspect of the method according to the invention, a shared secret based on the second public peer key is received which is encrypted with the fourth session key.

The device according to the invention is equipped and enabled for carrying out a method according to the invention as previously descried.

The device according to the invention preferably comprises a receiving interface and a sending interface for exchanging information with a responder.

Alternatively or in addtion, the device according to the invention comprises a receiving interface and a sending interface for exchanging information with a requester.

Advantageously, the device according to the invention can carry out the method according to the invention as previously described.

The invention is described in more details in the embodiments described below and depicted in the drawings as follows:

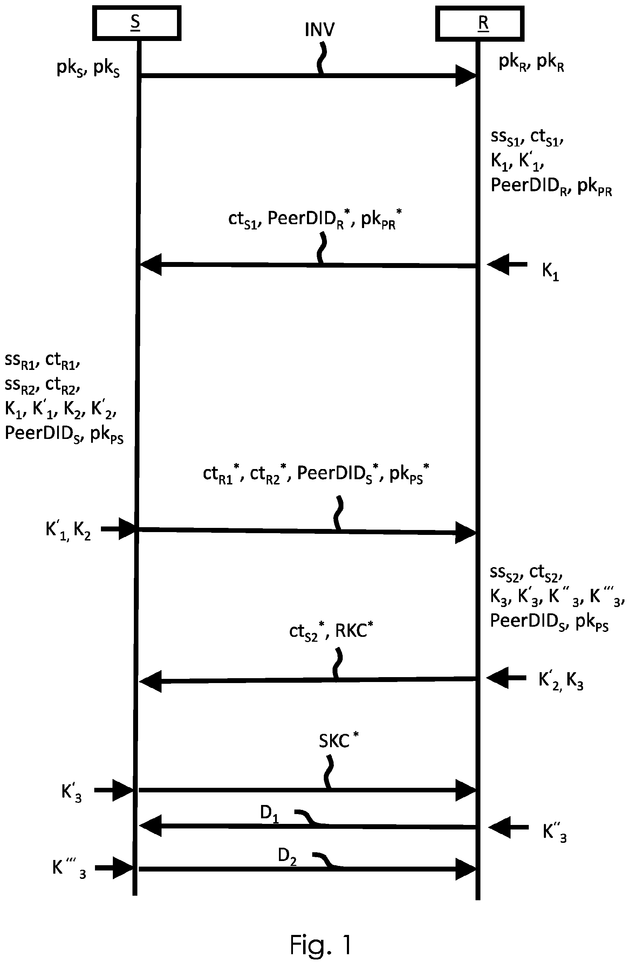

- Fig. 1: shows a schematic sketch of the process of exchanging decentralized digital identifiers.

In the following, a KEM-based protocol for the exchange of PeerDIDs between two entities in a secure way is disclosed, where all digital signatures are replaced with KEM-operations. The newly introduced protocol can be considered as an extension of Aries RFC 0023 and it is suitable for pre- and post-quantum applications. Additionally, it provides higher efficiency for post-quantum applications. The protocol of the method is depicted in fig. 1.

The communication is between two entities, a sender S, that may be considered equivalent to the role of a responder in the Aries RFC 0023 protocol and a receiver R that may be considered equivalent to the role of a requester in the Aries RFC 0023 protocol. We assume that both entities own an independent public DID that also contains a KEM public key, which may be published on the ledger. The corresponding KEM private keys are stored securely and secretely in the wallet of each communicating entity S and R. This assumption of independent public DIDs is denoted in the protocol in fig. 1 by the public DID of the sender with the public KEM key pk_{S} and the private, hence secret, KEM key sk_{S} and the public DID of the receiver with the public KEM key pk_{R} and the private KEM key sk_{R}. In the following, the steps of the protocol are described:
The protocol starts by an explicit invitation that is sent by the sender S using an out-of-band protocol or an implicit invitation using the public DID of the sender S, which is typically published on the Indy ledger. We assume that both invitations contain the sender public DID including his KEM public key pkₛ.

The receiver R firstly encapsulates the public KEM key pkₛ to derive a shared secret and a variable for the reconstruction of the shared secret, denoted as ss_{S1} and ct_{S1}, respectively. Note that ss_{S1} can be reconstructed only using the corresponding private KEM key sk_{S} and the variable ct_{S1}. Consequently, a key derivation function KDF, not explicitely depicted in fig. 1, is used to derive session keys K₁,K₁' from the secret ss_{S1}. Moreover, a new peer DID PeerDID_{R} is generated by the receiver R, which includes a KEM public key pk_{PR} of a newly generated KEM keypair comprising a private KEM key sk_{PR} and a corresponding public KEM key pk_{PR}.

The variable ct_{S1}, the ID of the KEM public key of the receiver KeyID with pk_{R}, and the newly generated peer DID PeerDID_{R} together with the public KEM key of the newly generated peer DID PeerDID_{R} pk_{PR} are transmitted to the sender S. Note that the latter two are encrypted with an Authenticated Encryption with Associated Data (AEAD) using the session key K₁. The encryption is indicated in the drawing with adding a superscript star to the reference sign of the encypted quantity. The session key, the respective communication is encrypted with, is indicated by a horizontal arrow with the respective session key pointing to the respective communication in fig. 1.

Only the sender S can reconstruct the shared secret ssₛ₁ by decapsulating the received variable ct_{S1} using his private KEM key sk_{S}. Hence, the same session keys K₁,K₁' can be derived, and both public KEM keys pk_{R} and pk_{PR} can be decrypted. Consequently, new shared secrets ss_{R1}, ss_{R2}, as well as new variables ct_{R1}, ct_{R2} are obtained by encapsulating both public KEM keys pk_{R} and pk_{PR}, respectively. Two further session keys are K₂,K₂' are then derived from concatenating all three shared secrets ss_{S1}, ss_{R1}, ss_{R2} available up to now. Furthermore, a new peer DID PeerDID_{S} is generated by the sender S, which includes a public KEM key of the newly generated KEM keypair which comprises a private KEM key sk_{PS} and a public KEM key pk_{PS}.

The variables ct_{R1}, ct_{R2} and the new generated peer DID PeerDID_{S} by the sender S including the corresponding public KEM key pk_{PS} are encrypted and transmitted to the receiver R. The variable ct_{R1}, ct_{R2} are encrypted with the session key K₁', which is already known to the receiver R, while peer DID PeerDID_{S} is encrypted with the newly generated session key K2.

Only the receiver R can reconstruct the shared secrets ss_{R1}, ssᵣ₂ by decrypting and decapsulating the received variables ct_{R1}, ct_{R2} using the session key K₁' as well as his private KEM key sk_{R} corresponding to the public KEM key of the receiver R and his private KEM key sk_{PR} corresponding to the new generated peer DID PeerDID_{S} of the sender S. Therefore, the same session keys K₂, K₂' can be derived only by the receiver R using the corresponding shared secrets ss_{S1}, ss_{R1}, ss_{R2}. Finally, the last shared secret ss_{S2} and the variable ct_{S2} are determined by encapsulating the public key of the peer DID PeerDID_{S} from the sender S pk_{PS}, and new session keys K₃, K₃', K₃", K₃‴ are derived from concatenating all available shared secrets ss_{S1}, ss_{S1}, ss_{R1}, ss_{R2}.

The variables ct_{S2} and a key confirmation RKC, that may include a nonce, timestamp, etc. to ensure tracing or uniqueness, are encrypted and transmitted to the sender S. The variable ct_{S2} is encrypted with the session key K₂', which is already known to the sender S, while the key confirmation RKC is encrypted with the newly generated session key K₃.

Only the sender can reconstruct the shared secret ss_{S2} by decrypting and decapsulating the received variable ct_{S2} using K₂' and his PeerDID private keys sk_{PS}. The same session keys K₃,K₃',K₃",K₃‴ are derived from concatenating all available secrets in this protocol ss_{S1},ss_{S2},ss_{R1}, ss_{R2}. The key confirmation is decrypted and checked.

A final key confirmation SKC is sent from the sender S to the receiver, which is encrypted using the session key K₃'. This may include the same nonce, timestamp, etc. sent by the receiver R, in order to ensure tracing or uniqueness.

The receiver R can decrypt the key confirmation SKC of the sender S using K₃', and checks for correctness. Here nonce, timestamp, etc. may be checked. If the last two checks for the key confirmation SKC, RKC by the sender S and the receiver R are successful, this protocol ends successfully. Both remaining session keys K₃",K₃‴ can be then used for encrypting further data D1, D2.

An explicit invitation from the sender may be encrypted using a session key derived from encapsulating the published public KEM key pk_{R} of the receiver R in case the sender S can access the public KEM key pk_{S} in a secure way before the invitation. This ensures that only the receiver R can decrypt the invitation using his private key sk_{R}.

In some applications, authentication of the receiver R is not necessarily required. Hence, it is possible to neglect some steps in this protocol. In particular, the encapsulation of the public KEM key pk_{R} of the receiver R and the decapsulation of the variable ct_{R1} using the private KEM key sk_{R} of the reciever R can be ignored, i.e., the shared secret ss_{R1} can be omitted for all calculations.

For the description of the aforementioned exampleous embodiments of the present invention, a Merkle tree may be used as a public log.

## Claims

1. Method for exchanging decentralized digital identifiers with a responder (S) within a Hyperledger Indy network, involving the steps of
- providing a public requester KEM-key (pk_{R}),
- receiving a public responder KEM-key (pk_{S}),
- agreeing on an first (K₁) and a second session key (K₁') based on the public responder KEM-key (pk_{S}),
- generating a first peer KEM-key pair with a first public peer KEM-key (pk_{PR}) and a first public decentralized digital peer identifier (PeerDID_{R}) and sending the first public peer KEM-key (pk_{PR}) and the first public decentralized digital peer identifier (PeerDID_{R}) after encryption with the first session key (K₁) to the responder (R),
- agreeing on a third (K₂) and a fourth session key (K₂') based on the first public peer KEM-key (pk_{PR}) and the public requester KEM-key (pk_{R}),
- receiving a second public peer key (pk_{PS}) and a second public decentralized digital peer identifier (PeerDID_{S}) from the responder (S) which are encrypted with the third session key (K₂),
- agreeing on a fifth (K₃) and sixth (K₃') and seventh (K₃") and eigth (K₃‴) session key based on the public responder KEM-key (pk_{S}) and the public requester key (pk_{R}) and the first public peer KEM-key (pk_{PR}) and the second public peer key (pk_{PS}),
- sending a receiving key conformation (RKC) after encryption with the fifth session key (K₃),
- receiving a sending key confirmation (SKC) which is encrypted with the sixth session key (K₃'), and
- preferably exchanging data (D₁, D₂) with the seventh (K₃") and eigth session key (K₃‴).

2. Method for exchanging decentralized digital identifiers with a requester within a Hyperledger Indy network, involving the steps of
- receiving a public requester KEM-key (pk_{R}),
- providing a public responder KEM-key (pk_{S}),
- agreeing on an first (K₁) and a second session key (K₁') based on the public responder KEM-key (pk_{S}),
- receiving a first public peer KEM-key (pk_{PR}) and a first public decentralized digital peer identifier (PeerDID_{R}) that is encrypted with the first session key (K₁) from the requester (R),
- agreeing on a third (K₂) and a fourth (K₂') session key based on the first public peer KEM-key (pk_{PR}) and the public requester KEM-key (pk_{R}),
- generating a second public peer KEM-key pair with a second public peer KEM-key (pk_{PS}) and a second public decentralized digital peer identifier (PeerDID_{S}) and sending the second public peer key (pk_{PS}) and the second public decentralized digital peer identifier (PeerDID_{S}) after encryption with the third session key (K₂) to the requester (R),
- agreeing on a fifth (K₃) and sixth (K₃') and seventh (K₃") and eigth session key (K₃‴) based on the public responder KEM-key (pk_{S}) and the public requester key (pk_{R}) and the first public peer KEM-key (pk_{PR}) and the second public peer key (pk_{PS}),
- receiving a receiving key conformation (RKC) which is encrypted with the fifth (K₃) session key,
- sending a sending key confirmation (SKC) after encryption with the sixth (K₃') session key, and
- preferably exchanging data (D₁, D₂) with the seventh (K₃") and eigth session key (K₃‴).

3. Method according to one of the previous claims, wherein agreeing on session keys based on KEM-keys involves agreeing on a shared secret.

4. Method according to one of the previous claims, wherein agreeing on session keys based on KEM-Keys involves applying a key derivation function on the shared secret.

5. Method according according to any of the preceding claims, at least according to claim 1, wherein a shared secret (ss_{R1}) based on the first public peer key (pk_{PR}) and/or a shared secret (ss_{R1}) based on the public requester (pk_{R}) key is/are received which is encrypted with the second session key (K₁').

6. Method according to any of the preceding claims, at least according to claim 1, wherein a shared secret (ss_{S2}) based on the second public peer key (pk_{PS}) is sent after encryption with the fourth session key (K₂').

7. Method according to any of the preceding claims, at least according to claim 2, wherein a shared secret based (ss_{R1}) on the first public peer key (pk_{PR}) and/or a shared secret (ss_{R2}) based on the public requester key (pk_{R}) is/are sent after encryption with the second session key( K₁').

8. Method according to any of the preceding claims, at least according to claim 2, wherein a shared secret (ss_{S2}) based on the second public peer key (pk_{PS}) is received which is encrypted with the fourth session key (K₂').

9. Device, equipped and enabled for carrying out a method according to any of the preceding claims, at least according to claim 1, comprising
- a receiving interface and a sending interface for exchanging information with a responder.

10. Device, equipped and enabled for carrying out a method according to any of the preceding claims, at least according to claim 2, comprising
- a receiving interface and a sending interface for exchanging information with a requester.
